# EUROPEAN PATENT APPLICATION

(11) **EP 4 621 570 A1**
(43) Date of publication of application: **24.09.2025**
(21) Application number: 23902314.6
(22) Date of filing: 30.10.2023
(51) Int. Cl.: G06F 9/50

(54) **RESOURCE ALLOCATION METHOD AND APPARATUS BASED ON CLOUD SERVICE**

(30) Priority: 13.12.2022 CN 202211600383
(71) Applicant: Huawei Cloud Computing Technologies Co., Ltd., Guiyang, Guizhou 550025 (CN)
(72) Inventor: XIN, Jinhan, Guiyang, Guizhou 550025 (CN); YU, Zhibin, Guiyang, Guizhou 550025 (CN); YU, Zhou, Guiyang, Guizhou 550025 (CN); WANG, Zhenhua, Guiyang, Guizhou 550025 (CN); YANG, Xiao, Guiyang, Guizhou 550025 (CN); LIU, Hui, Guiyang, Guizhou 550025 (CN); XU, Jie, Guiyang, Guizhou 550025 (CN); YU, Wei, Guiyang, Guizhou 550025 (CN)
(74) Representative: Pfenning, Meinig & Partner mbB
(86) International application number: PCT/CN2023/127543
(87) International publication number: WO 2024/125114

(57) **Abstract**

This application discloses a cloud service-based resource allocation method and apparatus, and pertains to the field of resource allocation technologies. The method is performed by a cloud platform. The method includes: obtaining capability level information of a resource in a resource cluster, where the resource cluster includes at least one type of heterogeneous resource, the heterogeneous resource includes a plurality of types of sub-resources, and the plurality of types of sub-resources have a same capability but different capability levels; obtaining a workload of a job to which a resource is to be allocated; and allocating the resource in the resource cluster to the job based on the workload and the capability level information. According to this application, a matching degree between a job and a resource can be improved, and more accurate resource allocation can be implemented, thereby improving resource utilization.

## Description

This application claims priority to Chinese Patent Application No. 202211600383.7 on December 13, 2022 and entitled "CLOUD SERVICE-BASED RESOURCE ALLOCATION METHOD AND APPARATUS", which is incorporated herein by reference in its entirety.

### TECHNICAL FIELD

This application relates to the field of resource allocation technologies, and in particular, to a cloud service-based resource allocation method and apparatus.

### BACKGROUND

When a big data analysis technology is used, to improve data analysis efficiency, a large-scale data analysis job may be converted into a large quantity of highly-parallel computing tasks, and the large quantity of highly-parallel computing tasks are implemented by using a distributed deployment cluster, to implement efficient data analysis. Therefore, it is essential to schedule tasks and resources in the cluster.

Currently, when a resource is to be scheduled for a task, a computing power requirement of the task is usually first estimated, and then the resource is allocated to the task based on the computing power requirement.

However, a scheduling granularity of this scheduling manner is coarse, resulting in low utilization of resources in the cluster.

### SUMMARY

This application provides a cloud service-based resource allocation method and apparatus. According to this application, a matching degree between a job and a resource can be improved, and more accurate resource allocation can be implemented, thereby improving resource utilization. Technical solutions provided in this application are described below.

According to a first aspect, this application provides a cloud service-based resource allocation method. The method may be performed by a cloud platform. The method includes: obtaining capability level information of a resource in a resource cluster, where the resource cluster includes at least one type of heterogeneous resource, the heterogeneous resource includes a plurality of types of sub-resources, and the plurality of types of sub-resources have a same capability but different capability levels; obtaining a workload of a job to which a resource is to be allocated; and allocating the resource in the resource cluster to the job based on the workload and the capability level information.

In the cloud service-based resource allocation method, the capability level information of the resource in the resource cluster needs to be obtained, the capability level information can indicate a capability level of the resource in the resource cluster, and resources having different capabilities can be distinguished based on the capability level information. Therefore, when the resource in the resource cluster is allocated to the job, a feature of unbalanced capabilities of heterogeneous resources can be considered, and bidirectional matching between a resource and a job can be implemented based on the capability level of the resource and the workload of the job. This can improve a matching degree between the job and the resource, and implement more accurate resource allocation, thereby improving resource utilization, and helping improve a computing parallelism degree of the job.

In an implementation, obtaining the workload of the job to which the resource is to be allocated includes: obtaining a workload metric of the job, where the workload metric includes one or more of the following: execution logic and a data parallelism degree of the job, a job operator, and an amount of data related to the job operator; and obtaining the workload of the job based on the workload metric. The execution logic of the job indicates overall implementation logic of the job. Optionally, the execution logic of the job may be reflected by using an execution plan of the job and a directed acyclic graph. The execution plan reflects an operator and data that are required for implementing the job, and computing power required for a task in the job. The directed acyclic graph reflects a mapping relationship and arithmetic logic in an execution phase of the job. The data parallelism degree of the job indicates a degree to which constituent units (for example, execution tasks) of the job can be executed in parallel. The job may be implemented according to an algorithm. The algorithm usually includes one or more job operators, where the job operator is a set of one or more operations performed on an operation object of the job. The amount of data related to the job operator is an amount of data that needs to be processed when the job operator is executed, and may be considered as an input data amount of the job operator.

Optionally, the workload metric may further include a metric that changes due to factors such as running of the job and the resource allocated to the job. For example, the workload metric further includes one or more of the following: a computing parallelism degree and an input data amount of the job, and idle time of the resource allocated to the job. The computing parallelism degree of the job is a degree to which constituent units (for example, execution tasks) of the job are actually executed in parallel in a process of executing the job by using the resource. The input data amount of the job is an actual input data amount in the process of executing the job by using the resource. The idle time of the resource allocated to the job is time for which the resource allocated to the job is not actually used.

The computing parallelism degree and the input data amount of the job and the idle time of the resource allocated to the job are all reflected in a job execution process, and are affected by a factor (for example, the resource that has been allocated to the job) that affects a job running status. Therefore, the computing parallelism degree and the input data amount of the job and the idle time of the resource allocated to the job need to be obtained in the job execution process. These workload metrics reflect actual execution of the job, and therefore may be used to update the workload reflected by the workload metric obtained before job execution. In this case, performing resource allocation based on the workload metric is actually adjusting the resource allocated to the job. The workload metric is obtained in the job execution process, so that actual execution of the job can be obtained based on the workload metric, and an actual requirement of the job for the resource can be obtained. This helps more accurately match the resource with the job, thereby further improving resource utilization. In addition, based on the workload metric obtained before the job, usually, only a resource that needs to be used for executing the job can be known, but use duration of the resource cannot be known. The idle time of the resource allocated to the job is obtained in the job execution process, so that the use duration of the resource by the job can be determined based on the idle time. In this way, the workload of the job is precisely monitored based on the use duration. This helps more accurately match the resource with the job.

For all jobs to which a same computing device needs to allocate resources, workload metrics that need to be obtained for the jobs are the same. However, due to some customization requirements for the jobs and individual differences of different jobs, some workload metrics collected by the computing device by default may not be required by some jobs. Therefore, obtaining the workload of the job based on the workload metric including: performing metric filtering on the workload metric based on a customized metric list of the job; and obtaining the workload of the job based on a workload metric obtained through filtering.

In an implementation scenario, the job includes at least one execution phase, and the execution phase includes at least one execution task. Obtaining the workload metric of the job includes: obtaining the workload metric by the job and/or the execution stage. Optionally, the workload metric may alternatively be obtained by the task.

Optionally, before allocating the resource in the resource cluster to the job based on the workload and the capability level information, the method further includes: obtaining, in a running process of the job, usage of a resource that has been allocated to the job. Correspondingly, allocating the resource in the resource cluster to the job based on the workload and the capability level information includes: allocating the resource in the resource cluster to the job based on the workload, the capability level information, and the usage.

The usage is obtained in the job execution process, so that actual usage of the resource can be obtained based on the usage, and then an allocable resource in the resource cluster can be obtained. This helps more accurately match the resource with the job, thereby improving resource utilization.

In an implementation, the usage may be reflected based on a microarchitecture event of a host providing the resource and/or a speed at which the resource executes program instructions. The microarchitecture event may reflect a running status of the virtual machine for executing the job. The speed at which the resource executes the program instructions may reflect occupancy of a physical core allocated to the job.

Optionally, before allocating the resource in the resource cluster to the job based on the workload and the capability level information, the method further includes: obtaining a performance bottleneck metric of the job, where the performance bottleneck metric indicates a performance bottleneck of the job. Correspondingly, allocating the resource in the resource cluster to the job based on the workload and the capability level information includes: allocating the resource in the resource cluster to the job based on the workload, the capability level information, and the performance bottleneck metric.

Optionally, the performance bottleneck metric may be reflected by an input/output affinity. The I/O affinity of the job indicates whether the job has an affinity with I/O. If the I/O affinity of the job is affinity, the performance bottleneck of the job is I/O. In this case, more resources are required to relieve an I/O pressure (for example, increasing a parallelism degree).

If the performance bottleneck indicates that the performance bottleneck of the job mainly lies in input/output, when the heterogeneous resource is allocated to the job, a resource with a low capability level in the heterogeneous resource may be preferentially allocated to the job. For example, when the performance bottleneck metric indicates that the performance bottleneck of the job is the input/output performance, and a core resource includes a super core and a common core, the common core may be preferentially allocated to the job when the core resource is allocated to the job, or the super core is allocated to the job when there is no available common core in the resource cluster. In this way, more cores can be allocated to the job at the same costs, so as to maximize the computing parallelism degree of the job. Correspondingly, a resource with a high capability in the heterogeneous resource can also be used for a job that has a high requirement for a capability of a resource, so as to implement effective resource utilization.

The cloud service-based resource allocation method provided in this application may be used to allocate an initial resource to the job, or may be used to adjust an initial resource allocated to the job. When the cloud service-based resource allocation method provided in this application is used to adjust an initial resource allocated to the job, allocating the resource in the resource cluster to the job based on the workload and the capability level information includes: on a basis of allocating the initial resource to the job, adjusting, based on the workload and the capability level information, the resource allocated to the job.

In an implementation, allocating the resource in the resource cluster to the job based on the workload and the capability level information includes: obtaining an allocation decision based on the workload and the capability level information, where the allocation decision indicates the resource allocated to the job; reviewing the allocation decision; and allocating the resource in the resource cluster to the job based on the allocation decision and a review result of the allocation decision.

The allocation decision indicates a resource that needs to be allocated to the job, but an actual situation of the resource cluster may not meet the allocation decision. Therefore, in an implementation, reviewing the allocation decision includes: obtaining an allocable resource in the resource cluster; and reviewing the allocation decision based on the allocable resource.

Optionally, the allocation decision indicates a type of the resource allocated to the job, and a quantity and a capability level of each type of resource. In this way, various resources can be allocated to the job based on an actual requirement of the job for the resources, and a ratio of the various resources allocated to the job can be controlled, for example, a ratio of a memory resource to a core resource is controlled, to implement refined resource allocation. This improves a matching degree between the job and the resource, thereby improving resource utilization.

Allocating the resource in the resource cluster to the job based on the allocation decision and the review result of the allocation decision includes: when the review result indicates that the allocable resource is capable of meeting the allocation decision, allocating the resource in the resource cluster to the job based on the allocation decision; or when the review result indicates that the allocable resource fails to meet the allocation decision, adjusting the allocation decision based on the allocable resource, and allocating the resource in the resource cluster to the job based on an adjusted allocation decision.

The allocation decision is reviewed, and when the allocation decision is not approved, the allocation decision is adjusted based on the allocable resource. In this way, the allocation decision can be adjusted with reference to an actual situation of the resource cluster. This implements dynamic adjustment on the allocation decision, and effectively ensures a matching degree between the job and the resource, thereby helping improve resource utilization. In addition, when the allocation decision indicates the type of the resource allocated to the job, and the quantity and the capability level of each type of resource, and the allocation decision is adjusted based on the allocable resource, each type of resource can be separately adjusted, to adjust a ratio of a plurality of types of resources, for example, adjust a ratio of a core to a memory. The ratio of the plurality of types of resources is adjusted, so that a matching degree between each type of resource and the job can be improved, a waste of resources can be reduced, and further resource utilization can be improved.

In an implementation, allocating the resource in the resource cluster to the job based on the allocation decision and the review result of the allocation decision includes: applying for the resource for the job from the resource cluster based on the allocation decision and the review result of the allocation decision, and binding the job to the resource applied for for the job.

Optionally, because the job includes a plurality of tasks, and the allocation decision may indicate to allocate a resource to each task, binding the job to the resource applied for for the job includes: binding the corresponding task to the resource applied for for each task.

Optionally, the resource in this application may include a physical resource and/or a virtual resource obtained through virtualization based on the physical resource. When the heterogeneous resource is a virtual resource, the plurality of types of sub-resources in the heterogeneous resource are respectively obtained through virtualization based on a plurality of types of physical resources that have a same capability but different capability levels.

In the resource cluster, the physical resource may carry a label. The label indicates a capability level of the physical resource, that is, the label records capability level information of the physical resource. In this case, the label of the physical resource may be read, to obtain the capability level information of the physical resource. The capability level of the physical resource is a bottom-layer resource metric of the physical resource.

When the resource is a virtual resource obtained through virtualization based on the physical resource, a capability level of the virtual resource is determined based on the physical resource on which the virtual resource depends. In an implementation, the virtual resource may carry a label. The label indicates a capability level of the virtual resource. In this case, the label of the virtual resource may be read, to obtain capability level information of the virtual resource. In another implementation, a mapping relationship between the physical resource and the virtual resource obtained through virtualization based on the physical resource may be obtained. The physical resource on which the virtual resource depends is determined based on the mapping relationship, then capability level information of the physical resource on which the virtual resource depends is obtained, and the capability level information is determined as the capability level information of the virtual resource, to obtain the capability level information of the virtual resource. The mapping relationship indicates a correspondence between the physical resource and the virtual resource obtained through virtualization based on the physical resource.

Optionally, the at least one type of heterogeneous resource includes a core heterogeneous resource, the core heterogeneous resource includes a super core and a common core, and a capability level of the super core is higher than a capability level of the common core.

According to a second aspect, this application provides a cloud service-based resource allocation apparatus. The cloud service-based resource allocation apparatus may be configured on a cloud platform. The cloud service-based resource allocation apparatus includes: an obtaining module, configured to obtain capability level information of a resource in a resource cluster, where the resource cluster includes at least one type of heterogeneous resource, the heterogeneous resource includes a plurality of types of sub-resources, and the plurality of types of sub-resources have a same capability but different capability levels, where the obtaining module is further configured to obtain a workload of a job to which a resource is to be allocated; and an allocation module, configured to allocate the resource in the resource cluster to the job based on the workload and the capability level information.

Optionally, the obtaining module is specifically configured to: obtain a workload metric of the job, where the workload metric includes one or more of the following: execution logic and a data parallelism degree of the job, a job operator, and an amount of data related to the job operator; and obtain the workload of the job based on the workload metric.

Optionally, the workload metric further includes one or more of the following: a computing parallelism degree and an input data amount of the job, and idle time of the resource allocated to the job.

Optionally, the obtaining module is specifically configured to: perform metric filtering on the workload metric based on a customized metric list of the job; and obtain the workload of the job based on a workload metric obtained through filtering.

Optionally, the job includes at least one execution phase, the execution phase includes at least one execution task, and the obtaining module is specifically configured to obtain the workload metric by the job and/or the execution phase.

Optionally, the obtaining module is further configured to obtain, in a running process of the job, usage of a resource that has been allocated to the job. Correspondingly, the allocation module is specifically configured to allocate the resource in the resource cluster to the job based on the workload, the capability level information, and the usage.

Optionally, the usage is reflected based on a microarchitecture event of a host providing the resource and/or a speed at which the resource executes program instructions.

Optionally, the obtaining module is further configured to obtain a performance bottleneck metric of the job, where the performance bottleneck metric indicates a performance bottleneck of the job. Correspondingly, the allocation module is specifically configured to allocate the resource in the resource cluster to the job based on the workload, the capability level information, and the performance bottleneck metric.

Optionally, the allocation module is specifically configured to: when the performance bottleneck metric indicates that the performance bottleneck of the job is input/output performance, allocate a resource with a low capability level in the heterogeneous resource to the job based on the workload and the capability level information.

Optionally, the allocation module is specifically configured to: on a basis of allocating an initial resource to the job, adjust, based on the workload and the capability level information, the resource allocated to the job.

Optionally, the allocation module is specifically configured to: obtain an allocation decision based on the workload and the capability level information, where the allocation decision indicates the resource allocated to the job; review the allocation decision; and allocate the resource in the resource cluster to the job based on the allocation decision and a review result of the allocation decision.

Optionally, the allocation decision indicates a type of the resource allocated to the job, and a quantity and a capability level of each type of resource.

Optionally, the allocation module is specifically configured to: obtain an allocable resource in the resource cluster; and review the allocation decision based on the allocable resource.

Optionally, the allocation module is specifically configured to: when the review result indicates that the allocable resource is capable of meeting the allocation decision, allocate the resource in the resource cluster to the job based on the allocation decision; or when the review result indicates that the allocable resource fails to meet the allocation decision, adjust the allocation decision based on the allocable resource, and allocate the resource in the resource cluster to the job based on an adjusted allocation decision.

Optionally, the allocation module is specifically configured to: apply for the resource for the job from the resource cluster based on the allocation decision and the review result of the allocation decision; and bind the job to the resource applied for for the job.

Optionally, the job includes a plurality of tasks, the allocation decision indicates to allocate a resource to each task, and the allocation module is specifically configured to bind the corresponding task to the resource applied for for each task.

Optionally, the resource includes a virtual resource obtained through virtualization based on a physical resource.

Optionally, the obtaining module is specifically configured to: obtain a mapping relationship between the physical resource and the virtual resource obtained through virtualization based on the physical resource; and obtain the capability level information of the resource based on the mapping relationship and capability level information of the physical resource.

Optionally, the at least one type of heterogeneous resource includes a core heterogeneous resource, the core heterogeneous resource includes a super core and a common core, and a capability level of the super core is higher than a capability level of the common core.

According to a third aspect, this application provides a computing device, including a memory and a processor. The memory stores program instructions. The processor runs the program instructions to perform the method according to any one of the first aspect and the possible implementations of the first aspect in this application.

According to a fourth aspect, this application provides a computer cluster, including a plurality of computing devices. The plurality of computing devices include a plurality of processors and a plurality of memories. The plurality of memories store program instructions. The plurality of processors run the program instructions, to enable the computer cluster to perform the method according to any one of the first aspect and the possible implementations of the first aspect in this application.

According to a fifth aspect, this application provides a computer-readable storage medium. The computer-readable storage medium is a non-volatile computer-readable storage medium. The computer-readable storage medium includes program instructions. When the program instructions are run on a computing device, the computing device is enabled to perform the method according to any one of the first aspect and the possible implementations of the first aspect in this application.

According to a sixth aspect, this application provides a computer program product including instructions. When the computer program product runs on a computer, the computer is enabled to perform the method according to any one of the first aspect and the possible implementations of the first aspect in this application.

### BRIEF DESCRIPTION OF DRAWINGS

FIG. 1 is a diagram of an implementation scenario related to a cloud service-based resource allocation method according to an embodiment of this application;
FIG. 2 is a diagram of another implementation scenario related to a cloud service-based resource allocation method according to an embodiment of this application;
FIG. 3 is a diagram of still another implementation scenario related to a cloud service-based resource allocation method according to an embodiment of this application;
FIG. 4 is a diagram of implementing a cloud service-based resource allocation method by a plurality of functional modules that are deployed on a computing device according to an embodiment of this application;
FIG. 5 is a diagram of adding a plurality of functional modules to an original function of Spark to implement a cloud service-based resource allocation method according to an embodiment of this application;
FIG. 6 is a flowchart of a cloud service-based resource allocation method according to an embodiment of this application;
FIG. 7 is a diagram of a correspondence between a virtual core and a super core and between a virtual core and a common core according to an embodiment of this application;
FIG. 8 is a flowchart of obtaining a workload of a job based on a workload metric according to an embodiment of this application;
FIG. 9 is a flowchart of allocating a resource to a job based on a workload, capability level information, and usage according to an embodiment of this application;
FIG. 10 is a diagram of a cloud service-based resource allocation apparatus according to an embodiment of this application; and
FIG. 11 is a diagram of a structure of a computing device cluster according to an embodiment of this application.

### DESCRIPTION OF EMBODIMENTS

To make the objectives, technical solutions, and advantages of this application clearer, the following further describes implementations of this application in detail with reference to the accompanying drawings.

When a big data analysis technology is used, to improve data analysis efficiency, a large-scale data analysis job may be converted into a large quantity of highly-parallel computing tasks, and the large quantity of highly-parallel computing tasks are implemented by using a distributed deployment cluster, to implement efficient data analysis. Therefore, it is essential to schedule tasks and resources in the cluster.

Currently, when a resource is to be scheduled for a task, a requirement (for example, a computing power requirement) of the task for the resource is usually first estimated, and then the resource is allocated to the task based on the requirement of the task for the resource. For example, in a cloud big data engine, Spark has become one of main engines for large-scale data batch processing, and Spark can schedule resources for hundreds of thousands of jobs on a cloud every day. When scheduling a resource for a job, Spark usually estimates a computing power requirement of a task, and then allocates the resource to the task based on the computing power requirement. Spark is a fast and universal computing engine designed for large-scale data processing.

However, a scheduling granularity of this scheduling manner is coarse, resulting in low utilization of resources in the cluster and a waste of a large amount of computing power. For example, at a cluster layer, there is an idle phase of a resource (for example, a central processing unit (central processing unit, CPU)) between jobs of a user, and there is also an idle resource in a running process of the jobs of the user. At a computing task layer, because computing workloads of different computing tasks are unbalanced, tasks that consume a small amount of resources and tasks that consume a large amount of resources coexist. However, according to a current scheduling manner, an equal amount of resources may be scheduled for the two tasks.

Embodiments of this application provide a cloud service-based resource allocation method. In the cloud service-based resource allocation method, capability level information of a resource in a resource cluster may be obtained, a workload of a job (job) to which the resource is to be allocated is obtained, and then the resource in the resource cluster is allocated to the job based on the workload and the capability level information. The resource cluster includes at least one type of heterogeneous resource. The heterogeneous resource includes a plurality of types of sub-resources, and the plurality of types of sub-resources have a same capability but different capability levels.

In the cloud service-based resource allocation method, the capability level information of the resource in the resource cluster needs to be obtained, the capability level information can indicate a capability level of the resource in the resource cluster, and resources having different capabilities can be distinguished based on the capability level information. Therefore, when the resource in the resource cluster is allocated to the job, a feature of unbalanced capabilities of heterogeneous resources can be considered, and bidirectional matching between a resource and a job can be implemented based on the capability level of the resource and the workload of the job. This implements more accurate resource allocation, and can improve a matching degree between the job and the resource, thereby improving resource utilization, and helping improve a computing parallelism degree of the job.

One job is used to implement one service of a user. The job may be triggered by a specific action, for example, by a job execution request sent by the user. Each job includes at least one execution stage (stage). Each execution phase includes a plurality of execution tasks (tasks). Each job needs to be completed by executing a plurality of execution tasks in a plurality of execution phases. For example, in Spark, a job is a Spark job, and is a stage set. The job includes a plurality of stages, and is triggered by a request sent by the user. A stage is an execution stage of the Spark job, and the stage includes a plurality of tasks.

For example, it is assumed that the job is used to obtain average scores of N subjects of M students in a class A. The job may be decomposed into three execution phases, and the three execution phases are respectively as follows: obtaining identity information of the M students in the class A, obtaining scores of the N subjects of the M students based on the identity information of the M students in the class A, and obtaining the average score of the subjects of the M students based on the scores of the N subjects of the M students. The execution phase of obtaining the identity information of the M students in the class A may include M execution tasks, where each execution task is used to obtain identity information of one student in the class A. The execution phase of obtaining the scores of the N subjects of the M students based on the identity information of the M students in the class A may include M execution tasks, where each execution task is used to obtain scores of the N subjects of the student based on the identity information of the student in the class A. The execution phase of obtaining the average scores of the subjects of the M students based on the scores of the N subjects of the M students may include N execution tasks, where each execution task is used to obtain an average score of one subject of the M students based on the scores of the subject of the M students.

It should be noted that names of the job, the execution phase, and the execution task and a relationship between the job, the execution phase, and the execution task are examples for description in this application, and are not intended to limit this application. In some implementation scenarios, the names of the job, the execution phase, and the execution task, and the relationship between the job, the execution phase, and the execution task may change with an application scenario. For example, layers between the job, the execution phase, and the execution task may be added or deleted based on an application scenario, and are not listed in embodiments of this application. However, if resource allocation is performed by using the idea of the cloud service-based resource allocation method provided in embodiments of this application, the method shall also fall within the protection scope of this application.

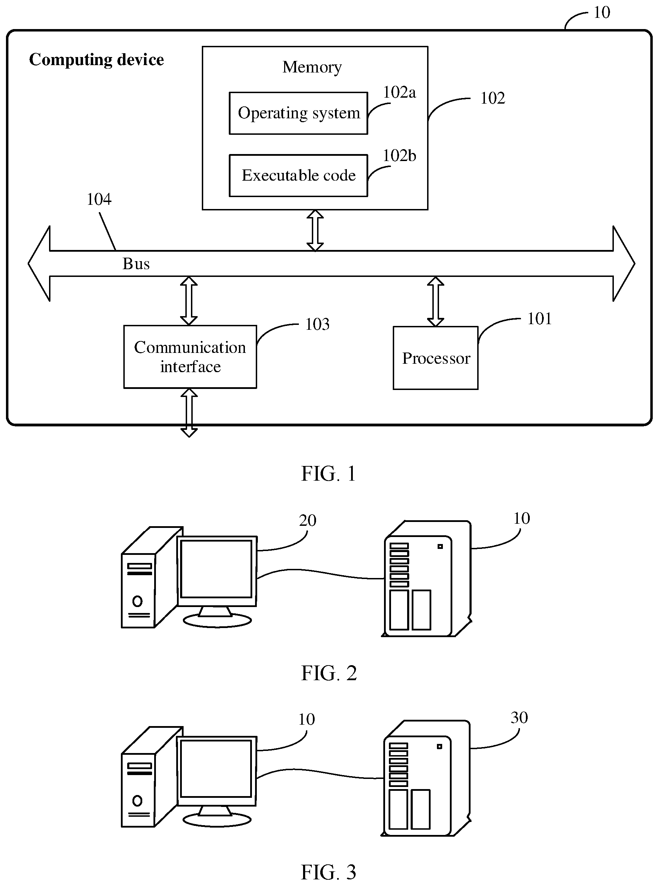

FIG. 1 is a diagram of an implementation scenario related to a cloud service-based resource allocation method according to an embodiment of this application. As shown in FIG. 1, the implementation scenario includes a computing device 10. The computing device 10 is configured to perform the cloud service-based resource allocation method provided in embodiments of this application. For example, the computing device 10 is configured to: receive a resource allocation indication, obtain, based on the resource allocation indication, capability level information of a resource in a resource cluster and a workload of a job to which a resource is to be allocated, and then allocate the resource in the resource cluster to the job based on the capability level information and the workload. The resource cluster includes at least one type of heterogeneous resource. Each type of heterogeneous resource includes a plurality of types of sub-resources. The plurality of types of sub-resources have a same capability but different capability levels. For example, the resource cluster includes a core heterogeneous resource. The core heterogeneous resource includes a super core and a common core. The super core and the common core each have a function of the core, but a capability level of the super core is higher than a capability level of the common core. Optionally, in a process of allocating the resource in the resource cluster to the job based on the capability level information and the workload, the computing device 10 may first make a resource allocation decision based on the capability level information and the workload; review the allocation decision; determine, based on the allocation decision and a review result, a resource that needs to be allocated to the job; apply for, from the resource cluster, the resource that needs to be allocated to the job; and bind the job to the resource applied for for the job, to complete a process of allocating the resource to the job.

The computing device 10 may be implemented by using a physical machine, a physical machine cluster including a plurality of physical machines, a graphics card, an artificial intelligence computing chip, a bare metal server, a cloud server, an edge device, an internet of things (internet of things, IoT) device, a terminal device, a virtual machine, a container, or the like. In addition, the computing device 10 may be independently deployed on the physical machine, the physical machine cluster, the bare metal server, the cloud server, the virtual machine, or the container. Alternatively, the computing device 10 may be deployed on one or more of a plurality of physical machines, a plurality of physical machine clusters, a plurality of bare metal servers, a plurality of cloud servers, a plurality of virtual machines, and a plurality of containers in a distributed manner.

An embodiment of this application provides a computing device. The computing device is configured to perform a part or all of functions of the cloud service-based resource allocation method provided in embodiments of this application. FIG. 1 is a diagram of a structure of a computing device according to an embodiment of this application. As shown in FIG. 1, the computing device 10 includes a processor 101, a memory 102, a communication interface 103, and a bus 104. The processor 101, the memory 102, and the communication interface 103 are communicatively connected to each other through the bus 104. The computing device 10 may be a server or a terminal device. It should be understood that quantities of processors and memories in the computing device 10 are not limited in this application.

The processor 101 may include a general-purpose processor and/or a dedicated hardware chip. The general-purpose processor may include any one or more of processors such as a central processing unit (central processing unit, CPU), a microprocessor (microprocessor, MP), or a graphics processing unit (graphics processing unit, GPU). For example, the CPU is a single-core processor (single-CPU), or a multi-core processor (multi-CPU). The dedicated hardware chip is a hardware module capable of performing high-performance processing. The dedicated hardware chip includes at least one of a digital signal processor (digital signal processor, DSP), an application-specific integrated circuit (application-specific integrated circuit, ASIC), a field-programmable gate array (field-programmable gate array, FPGA), or a network processor (network processor, NP). The processor 101 may alternatively be an integrated circuit chip and has a signal processing capability. In an implementation process, the part or all of the functions of the cloud service-based resource allocation method in this application may be implemented by using an integrated logic circuit of hardware in the processor 101 or by using instructions in a form of software.

The memory 102 is configured to store a computer program, and the computer program includes an operating system 102a and executable code (namely, program instructions) 102b. For example, the memory 102 is a read-only memory, another type of static storage device that can store static information and instructions, a random access memory, another type of dynamic storage device that can store information and instructions, an electrically erasable programmable read-only memory, a compact disc read-only memory, other optical disk storage, optical disc storage (including a compact disc, a laser disc, an optical disc, a digital versatile disc, a Blu-ray disc, or the like), a magnetic disk storage medium, another magnetic storage device, or any other medium that can be used to carry or store expected executable code in a form of instructions or a data structure and that can be accessed by a computer, but is not limited thereto. For example, the memory 102 is configured to store an egress port queue, and the like. For example, the memory 102 exists independently, and is connected to the processor 101 through the bus 104. Alternatively, the memory 102 and the processor 101 are integrated together. For example, the memory 102 may include a volatile memory (volatile memory), for example, a random access memory (random access memory, RAM). The processor 101 may further include a non-volatile memory (non-volatile memory), for example, a read-only memory (read-only memory, ROM), a flash memory, a hard disk drive (hard disk drive, HDD), or a solid-state drive (solid-state drive, SSD).

The memory 102 may store executable code. When the executable code stored in the memory 102 is executed by the processor 101, the processor 101 is configured to implement the part or all of the functions of the cloud service-based resource allocation method provided in embodiments of this application. In other words, the memory 102 stores instructions used to implement the part or all of the functions of the cloud service-based resource allocation method. For an implementation of performing the process by the processor 101, refer to related descriptions in embodiments of this application. The memory 102 may further include a software module, data, and the like that are required for another running process like an operating system.

The communication interface 103 uses, for example but not limited to, a network interface card, or a transceiver module like a transceiver, to implement communication between the computing device and another device or a communication network. For example, the communication interface 103 may be any one or any combination of the following components with network access functions: a network interface (for example, an Ethernet interface) and a wireless network interface card.

The bus 104 is any type of communication bus configured to implement interconnection between internal components (for example, the memory 102, the processor 101, and the communication interface 103) in the computing device. For example, the bus 104 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, only one line is used to represent the bus in FIG. 1, but this does not mean that there is only one bus or only one type of bus. The bus 104 may include a path for transmitting information between components (for example, the memory 102, the processor 101, and the communication interface 103) in the computing device 10. In this embodiment of this application, an example in which the foregoing components in the computing device are interconnected through the bus 104 is used for description. Optionally, the foregoing components in the computing device 10 may be communicatively connected to each other in another connection manner other than through the bus 104. For example, the foregoing components in the computing device 10 are interconnected through an internal logical interface.

It should be noted that the foregoing plurality of components may be separately disposed on chips independent of each other, or at least some or all of the components may be disposed on a same chip. Whether the components are separately disposed on different chips or integrated and disposed on one or more chips usually depends on a requirement of a product design. Specific implementations of the foregoing components are not limited in embodiments of this application. Descriptions of procedures corresponding to the foregoing accompanying drawings have respective focuses. For a part that is not described in detail in a procedure, refer to related descriptions of other procedures.

There are a plurality of application scenarios of the cloud service-based resource allocation method provided in embodiments of this application. The following two examples are used below to describe the application scenarios.

In a first application scenario, the cloud service-based resource allocation method provided in embodiments of this application may be provided for a user in a form of resource allocation service. In addition, the resource allocation service may be invoked in a form of application programming interface (application programming interface, API). A service provider has a large quantity of basic resources, such as computing resources, storage resources, and network resources, and the service provider can provide the resource allocation service by using the basic resources. After the user purchases the resource allocation service from the service provider, the service provider can provide the resource allocation service for the user. For example, the user may purchase the resource allocation service from a management platform of the service provider through a client, and send a resource allocation request to the management platform of the service provider, to request to allocate a resource to a job indicated by the resource allocation request. The management platform of the service provider may select, from computing devices managed by the management platform of the service provider, a computing device that executes a resource allocation task, and send the resource allocation request to the computing device. The computing device is configured to perform, based on the resource allocation request, the cloud service-based resource allocation method provided in embodiments of this application, to allocate the resource to the job indicated by the resource allocation request, so as to complete a process of providing the resource allocation service for the user.

In this case, as shown in FIG. 2, the implementation scenario may further include a client 20. The client 20 is configured to implement interaction between the user and the management platform. Optionally, the client 20 may be a mobile phone, a tablet computer, a personal computer, a virtual machine, a container, a laptop computer, a mobile phone, a multimedia player, a smart home appliance, an artificial intelligence device, a smart wearable device, an e-reader, a smart vehicle-mounted device, an internet of things device, or the like. In this case, the computing device 10 may be a server. In addition, the server may be one server, a server cluster including several servers, or a cloud computing service center. A large quantity of basic resources of a cloud service provider are deployed in the cloud computing service center. For example, computing resources, storage resources, and network resources are deployed in the cloud computing service center. The cloud computing service center may use the large quantity of basic resources to implement the cloud service-based resource allocation method provided in embodiments of this application.

When the server is implemented by using the cloud computing service center, the server provides a resource allocation function for the user, and the cloud service provider may abstract the resource allocation function into a resource allocation cloud service on the cloud platform. After the user purchases the resource allocation cloud service on the cloud platform, the cloud platform can provide the resource allocation cloud service by using the resources in the cloud computing service center and according to the cloud service-based resource allocation method provided in embodiments of this application. In addition, the resource allocation cloud service may be provided as an independent cloud service, or may be provided as an additional service of another cloud service. For example, the resource allocation cloud service may be provided as an additional service of a big data analysis cloud service.

Optionally, in this embodiment of this application, the cloud platform may be a cloud platform of a central cloud or a cloud platform of an edge cloud. In addition, when the computing device 10 is deployed in a distributed deployment manner, the cloud platform may alternatively be a cloud platform including a central cloud and an edge cloud. In this case, the computing device 10 may be partially deployed on the cloud platform of the edge cloud, and partially deployed on the cloud platform of the central cloud. In addition, the computing device 10 may alternatively be deployed on a public cloud, a private cloud, and/or a hybrid cloud. This is not specifically limited in embodiments of this application. It should be noted that, in an implementation environment shown in FIG. 2, the computing device 10 may alternatively be implemented by using another resource platform other than the cloud platform. This is not specifically limited in embodiments of this application. In this case, the server may be implemented by using a resource in the another resource platform, and provide, for the user, a related service of allocating a resource to a job.

In a second application scenario, the cloud service-based resource allocation method provided in embodiments of this application may be provided for a user in a form of application package. For example, a service provider may provide, for the user, an application package used to implement the cloud service-based resource allocation method provided in embodiments of this application. In this case, the computing device 10 is a computing device owned by the user. After the user obtains the application package from the service provider, the user may install the application package in the computing device 10, to obtain an application used to perform the cloud service-based resource allocation method. After the computing device 10 receives a resource allocation request triggered by the user, the application may perform the cloud service-based resource allocation method based on the resource allocation request. In an implementation, the cloud service-based resource allocation method may be used by the user through a resource manager, a resource scheduler, a plug-in thereof, or the like.

In this case, the computing device 10 may be a client. In addition, as shown in FIG. 3, the implementation scenario may further include a computing device 30. The computing device 30 is configured to provide, for the computing device 10, an application package used to implement the cloud service-based resource allocation method provided in embodiments of this application. Optionally, the computing device 30 may be a server or the like.

In a possible implementation, the cloud service-based resource allocation method provided in embodiments of this application may be implemented by using one or more functional modules deployed on the computing device 10. In addition, each functional module may be implemented by executing a computer program by the computing device. When the cloud service-based resource allocation method is implemented by using a plurality of functional modules, the plurality of functional modules may be deployed in a centralized or distributed manner. Correspondingly, the plurality of functional modules may be implemented by executing a computer program by one or more computing devices. Each of the one or more computing devices can implement a part or all of functions of the cloud service-based resource allocation method provided in embodiments of this application.

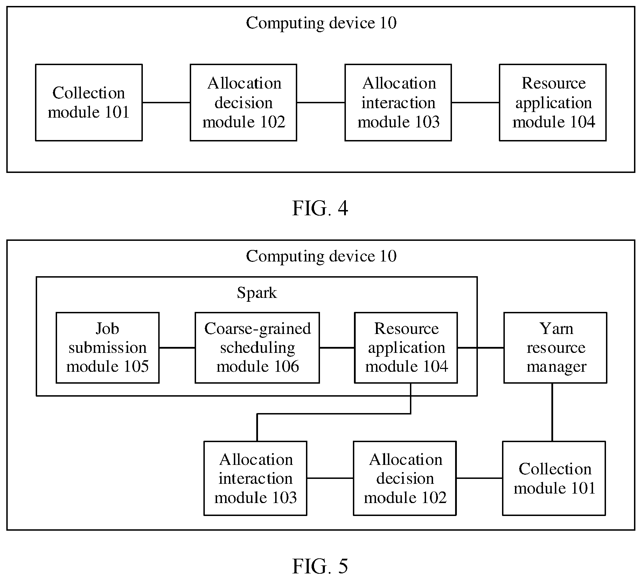

FIG. 4 is a diagram of implementing a cloud service-based resource allocation method by a plurality of functional modules that are deployed on a computing device 10 according to an embodiment of this application. As shown in FIG. 4, the computing device 10 includes a collection module 101, an allocation decision module 102, an allocation interaction module 103, and a resource application module 104. The collection module 101 is configured to: obtain capability level information of a resource in a resource cluster, obtain a workload of a job to which a resource is to be allocated, and provide the capability level information and the workload of the job for the resource allocation decision module 102. The allocation decision module 102 is configured to: make a resource allocation decision based on the capability level information and the workload of the job, and provide the allocation decision for the allocation interaction module 103. The allocation interaction module 103 is configured to: review the allocation decision, obtain a final allocation decision based on the allocation decision and a review result, and provide the allocation decision for the resource application module 104. The resource application module 104 is configured to: apply for the resource based on the allocation decision, and bind the job to the resource applied for for the job, to complete a process of allocating the resource to the job. For an implementation process in which each module in FIG. 4 implements a function of the module, refer to related descriptions in the method embodiment of this application. It should be noted that FIG. 4 shows an example of implementing, by using a plurality of functional modules, the cloud service-based resource allocation method provided in embodiments of this application. The cloud service-based resource allocation method may alternatively be implemented by using more or fewer modules than those shown in FIG. 4. This is not limited in embodiments of this application. In addition, the collection module 101, the allocation decision module 102, the allocation interaction module 103, and the resource application module 104 may all be resident processes of the computing device, and are deployed in an operating system of a server.

In an implementation scenario, functions of the collection module 101, the allocation decision module 102, the allocation interaction module 103, and the resource application module 104 may be functions added in addition to original functions of Spark. For example, as shown in FIG. 5, original functional modules used to implement resource allocation in Spark include a job submission module 105 and a coarse-grained scheduling module 106. The job submission module 105 is configured to: receive a resource allocation indication, and determine, based on the resource allocation indication, the job to which the resource is to be allocated. The coarse-grained scheduling module 106 is configured to perform coarse-grained resource scheduling for the job. In addition, when Spark uses a Yarn resource manager to perform resource scheduling and management, after making a resource scheduling decision, the coarse-grained scheduling module 106 needs to interact with the Yarn resource manager, to allocate, to the job, the resource indicated by the resource scheduling decision. In this application, the functions of the collection module 101, the allocation decision module 102, the allocation interaction module 103, and the resource application module 104 are added in addition to the original functions of Spark. In this case, the capability level information collected by the collection module 101 may be obtained by monitoring the Yarn resource manager, and the collected workload may be obtained by monitoring running of the job. The resource application module 104 may be deployed in Spark, and is configured to apply to the Yarn resource manager for the resource allocated to the job. In addition, the resource application module 104 is further configured to: apply to the Yarn resource manager for the resource based on the scheduling decision of the coarse-grained scheduling module 106, and bind the job to the resource applied for for the job. For example, the scheduling decision of the coarse-grained scheduling module 106 may indicate an initial resource scheduled for the job after an execution request for the job is received. In this case, the resource application module 104 is used by the Yarn resource manager to apply for the initial resource, and bind the job to the initial resource applied for, so that the job starts to be executed by using the initial resource. Correspondingly, the scheduling decision of the allocation decision module 102 indicates a resource adjusted for the job based on the initial resource. In addition, because the resource cluster in this application includes a heterogeneous resource. The resource managed by the Yarn resource manager includes at least one type of heterogeneous resource. The heterogeneous resource includes a plurality of types of sub-resources, and the plurality of types of sub-resources have a same capability but different capability levels. As shown in FIG. 5, the resource managed by the Yarn resource manager includes a core heterogeneous resource. The core heterogeneous resource includes a super core (super core for short) and a common core (common core for short). The super core and the common core each have a function of a core, but capability levels of the super core and the common core are different, and a capability level of the super core is higher than a capability level of the common core. A resource platform having the heterogeneous resource may be referred to as a heterogeneous resource platform. For example, a resource platform having the super core and the common core may be referred to as a super-common core platform.

In addition, with different application scenarios, the cloud service-based resource allocation method provided in embodiments of this application may also be implemented in a plurality of forms. For example, the cloud service-based resource allocation method may be presented in a form of big data service product of the heterogeneous resource platform (for example, the super-common core platform), or may be presented in a form of batch processing big data analysis product related to a platform-as-a-service (platform-as-a-service, PaaS) layer or software-as-a-service (software-as-a-service, SaaS) layer, or may be presented in a form of resource scheduling service at a SaaS layer. Correspondingly, a manner of providing a service according to the cloud service-based resource allocation method may be as follows: selling the service by using the cloud service-based resource allocation method as a part of a matching software solution method on the heterogeneous resource platform, or selling the service together with batch processing big data products at the PaaS/SaaS layer, or charging for the service as a service of the SaaS platform by time or traffic.

It should be understood that the foregoing content is example descriptions of the application scenarios of the cloud service-based resource allocation method provided in embodiments of this application, and does not constitute a limitation on the application scenarios of the cloud service-based resource allocation method. A person of ordinary skill in the art may learn that, as a service requirement changes, the application scenario of the cloud service-based resource allocation method may be adjusted based on an application requirement. The application scenarios are not enumerated in embodiments of this application.

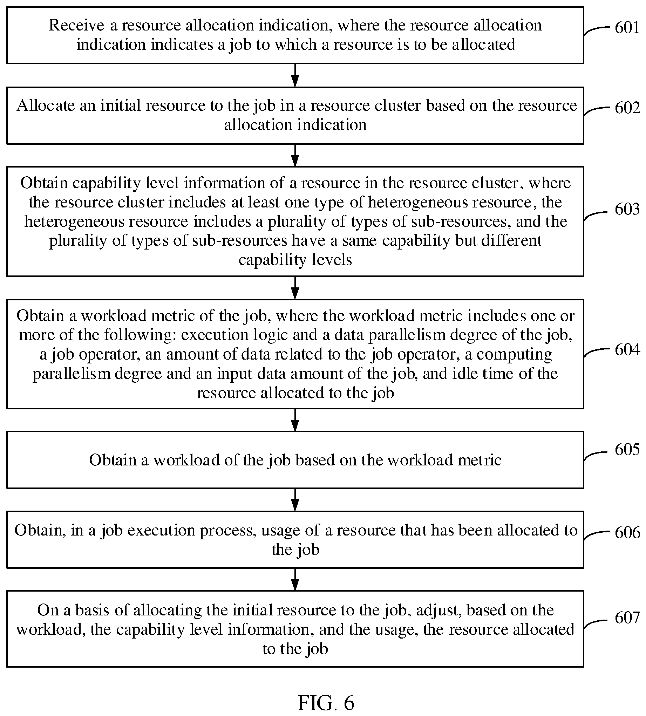

The following describes the cloud service-based resource allocation method provided in embodiments of this application. As shown in FIG. 6, the cloud service-based resource allocation method includes the following steps.

Step 601: Receive a resource allocation indication, where the resource allocation indication indicates a job to which a resource is to be allocated.

The resource allocation indication may be triggered by a user by using a specified operation, and sent to a computing device through a client used by the user. Alternatively, the resource allocation indication may be sent by a management platform (for example, a resource management platform or a scheduling platform) to a computing device. The resource allocation indication indicates the computing device to perform resource allocation for the job to which the resource is to be allocated.

Step 602: Allocate an initial resource to the job in a resource cluster based on the resource allocation indication.

After receiving the resource allocation indication, the computing device may first allocate the initial resource to the job, to start to execute the job by using the initial resource. In an implementation, the computing device may allocate the initial resource to the job by using a dynamic resource allocation (dynamic allocation, DA) function. For example, as shown in FIG. 5, in Spark, Spark includes the job submission module 105 and the coarse-grained scheduling module 106. During implementation of step 602, the coarse-grained scheduling module 106 is configured to determine a resource scheduling decision for the initial resource for the job by using the dynamic resource allocation function. The resource application module 104 is configured to: interact with a Yarn resource manager based on the resource scheduling decision, to apply for the initial resource, and bind the job to the initial resource applied for, to allocate the initial resource to the job.

It should be noted that step 602 is an optional step. During resource allocation, whether to perform step 602 may be determined based on a requirement in an application scenario. For example, step 602 may be performed when the cloud service-based resource allocation method provided in this embodiment of this application is used to adjust the initial resource allocated to the job. Step 602 is not performed when the cloud service-based resource allocation method provided in this embodiment of this application is used to allocate the initial resource to the job. In addition, when the cloud service-based resource allocation method provided in this embodiment of this application is used to adjust the initial resource allocated to the job, the initial resource may also be obtained through allocation according to the cloud service-based resource allocation method provided in this embodiment of this application.

Step 603: Obtain capability level information of a resource in a resource cluster, where the resource cluster includes at least one type of heterogeneous resource, the heterogeneous resource includes a plurality of types of sub-resources, and the plurality of types of sub-resources have a same capability but different capability levels.

In this application, the resource cluster includes the at least one type of heterogeneous resource. The heterogeneous resource includes the plurality of types of sub-resources, and the plurality of types of sub-resources have the same capability but different capability levels. For example, the at least one type of heterogeneous resource includes a core heterogeneous resource. The core heterogeneous resource includes a super core and a common core. The super core and the common core each have a function of a core, but capability levels of the super core and the common core are different, and a capability level of the super core is higher than a capability level of the common core.

Optionally, the resource in this application may include a physical resource and/or a virtual resource obtained through virtualization based on the physical resource. When the heterogeneous resource is a virtual resource, the plurality of types of sub-resources in the heterogeneous resource are respectively obtained through virtualization based on a plurality of types of physical resources that have a same capability but different capability levels. For example, the core heterogeneous resource may include: a super virtual core obtained through virtualization based on the super core and a common virtual core obtained through virtualization based on the common core. The super virtual core and the common virtual core each have a function of a virtual core, but capability levels of the super virtual core and the common virtual core are different, and a capability level of the super virtual core is higher than a capability level of the common virtual core.

In the resource cluster, the physical resource may carry a label. The label indicates a capability level of the physical resource, that is, the label records capability level information of the physical resource. In this case, the label of the physical resource may be read, to obtain the capability level information of the physical resource. The capability level of the physical resource is a bottom-layer resource metric of the physical resource.

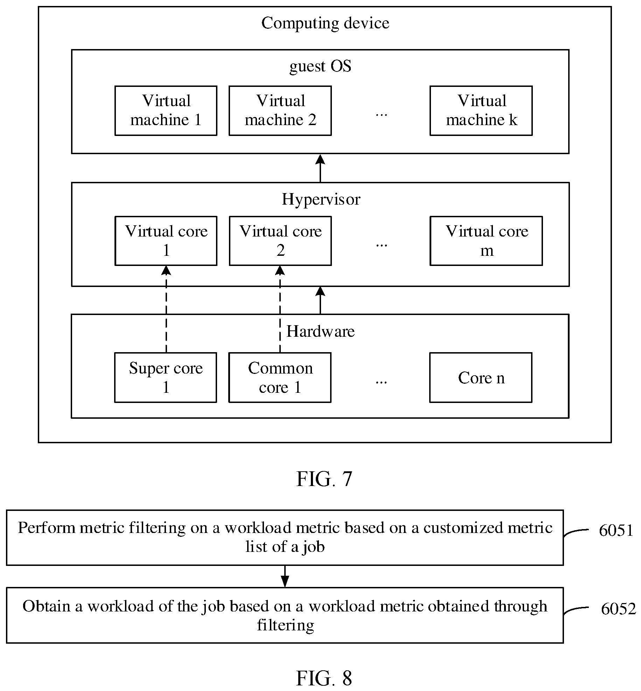

When the resource is a virtual resource obtained through virtualization based on the physical resource, a capability level of the virtual resource is determined based on the physical resource on which the virtual resource depends. In an implementation, the virtual resource may carry a label. The label indicates a capability level of the virtual resource. In this case, the label of the virtual resource may be read, to obtain capability level information of the virtual resource. In another implementation, a mapping relationship between the physical resource and the virtual resource obtained through virtualization based on the physical resource may be obtained. The physical resource on which the virtual resource depends is determined based on the mapping relationship, then capability level information of the physical resource on which the virtual resource depends is obtained, and the capability level information is determined as the capability level information of the virtual resource, to obtain the capability level information of the virtual resource. The mapping relationship indicates a correspondence between the physical resource and the virtual resource obtained through virtualization based on the physical resource. Optionally, the mapping relationship may be obtained when the virtual resource is obtained through virtualization by using a virtualization technology. In addition, a management program (Hypervisor) of a host on which the virtual resource is located may be modified, to cause the Hypervisor to transfer the mapping relationship to a guest system (guest OS). For example, as shown in FIG. 7, it is assumed that mapping relationships of a virtual core 1 and a virtual core 2 indicate that the virtual core 1 is obtained through virtualization based on the super core 1, and the virtual core 2 is obtained through virtualization based on the common core 1. In addition, capability level information of the super core 1 indicates that a capability level of the super core 1 is super, and capability level information of the common core 1 indicates that a capability level of the common core 1 is common. In this case, it may be learned, based on the mapping relationship and the capability level information of the physical resource, that capability level information of the virtual core 1 indicates that a capability level of the virtual core 1 is super, and capability level information of the virtual core 2 indicates that a capability level of the virtual core 2 is common.

When the cloud service-based resource allocation method provided in this embodiment of this application is used to allocate the initial resource to the job, the capability level information of the virtual resource may be obtained before the job starts to be executed. When the cloud service-based resource allocation method provided in this embodiment of this application is used to adjust the initial resource allocated to the job, because the mapping relationship between the virtual resource and the physical resource may change, the capability level information of the virtual resource may be obtained before the job starts to be executed, or the capability level information of the virtual resource may be obtained in a job execution process.

Step 604: Obtain a workload metric of the job, where the workload metric includes one or more of the following: execution logic and a data parallelism degree of the job, a job operator, an amount of data related to the job operator, a computing parallelism degree and an input data amount of the job, and idle time of the resource allocated to the job.

The workload metric reflects a workload of the job. In an implementation, the workload metric includes one or more of the following: the execution logic and the data parallelism degree of the job, the job operator, and the amount of data related to the job operator. The execution logic of the job indicates overall implementation logic of the job. Optionally, the execution logic of the job may be reflected by using an execution plan of the job and a directed acyclic graph (directed acyclic graph, DAG). The execution plan reflects an operator and data that are required for implementing the job, and computing power required for a task in the job. The directed acyclic graph reflects a mapping relationship and arithmetic logic in an execution phase of the job. The data parallelism degree of the job indicates a degree to which constituent units (for example, execution tasks) of the job can be executed in parallel. The data parallelism degree of the job is determined based on a manner of writing executable code of the job. For example, when the manner of writing the executable code of the job indicates that there is no mutual data invocation between two constituent units (for example, execution tasks) of the job, the two constituent units (for example, the execution tasks) can be executed in parallel. The job may be implemented according to an algorithm. The algorithm usually includes one or more job operators, where the job operator is a set of one or more operations performed on an operation object of the job. The amount of data related to the job operator is an amount of data that needs to be processed when the job operator is executed, and may be considered as an input data amount of the job operator. The execution logic and the data parallelism degree of the job, the job operator, and the amount of data related to the job operator are all determined by a manner of writing an executable program of the job, and do not change due to factors such as running of the job and the resource allocated to the job. Therefore, these workload metrics need to be obtained only before resource scheduling is performed based on the workload metrics. For example, the workload metrics may be obtained before job execution and/or in the job execution process.

Optionally, the workload metric may further include a metric that changes due to factors such as running of the job and the resource allocated to the job. For example, the workload metric may further include one or more of the following: the computing parallelism degree and the input data amount of the job, and the idle time of the resource allocated to the job. The computing parallelism degree of the job is a degree to which constituent units (for example, execution tasks) of the job are actually executed in parallel in a process of executing the job by using the resource. The input data amount of the job is an actual input data amount in the process of executing the job by using the resource. In an implementation, in Spark, the input data amount may be represented by a shuffle data amount. The shuffle data amount is a unique metric of the Spark framework, can be used to evaluate a workload of the job, and is a part of the input data amount. For example, if 10 GB data is input to Spark for processing, 5 GB data is shuffle data. The idle time of the resource allocated to the job is time for which the resource allocated to the job is not actually used. For example, in Spark, if the job is executed by an executor (executor), the idle time of the resource allocated to the job may be represented by idle time of a resource used by the executor. The executor is a Java virtual machine (Java virtual machine, JVM) process in Spark, and is responsible for executing a specific task of a Spark job. The computing parallelism degree and the input data amount of the job and the idle time of the resource allocated to the job are all reflected in the job execution process, and are affected by a factor (for example, the resource that has been allocated to the job) that affects a job running status. Therefore, the computing parallelism degree and the input data amount of the job and the idle time of the resource allocated to the job need to be obtained in the job execution process. These workload metrics reflect actual execution of the job, and therefore may be used to update the workload reflected by the workload metric obtained before job execution. In this case, performing resource allocation based on the workload metric is actually adjusting the resource allocated to the job. The workload metric is obtained in the job execution process, so that actual execution of the job can be obtained based on the workload metric, and an actual requirement of the job for the resource can be obtained. This helps more accurately match the resource with the job, thereby further improving resource utilization. In addition, based on the workload metric obtained before the job execution, usually, only a resource that needs to be used for executing the job can be known, but use duration of the resource cannot be known. The idle time of the resource allocated to the job is obtained in the job execution process, so that the use duration of the resource by the job can be determined based on the idle time. In this way, the workload of the job is precisely monitored based on the use duration. This helps more accurately match the resource with the job.

In an implementation scenario, the job includes at least one execution phase, and the execution phase includes at least one execution task. Obtaining the workload metric of the job includes: obtaining the workload metric by the job and/or the execution stage. Optionally, the workload metric may alternatively be obtained by the task.

Optionally, step 604 may be implemented by the collection module 101 in FIG. 5. In addition, when step 604 is implemented by the collection module 101, the collection module 101 may be deployed in a computing device configured to schedule the resource in the resource cluster. When the resource is a virtual resource, all jobs are implemented by a virtual instance (for example, a virtual machine) that uses the virtual resource. A listener may be provided in the virtual instance, and the listener is configured to obtain a workload metric of a job executed by the virtual instance. For example, in Spark, a Spark listener bus (listener bus) can interact with Yarn, and the listener can listen to job execution by consuming an event in the Spark listener bus in real time, to obtain the workload metric of the job. Correspondingly, the collection module 101 is configured to obtain the workload metric from the listener when the workload metric needs to be obtained.

Step 605: Obtain the workload of the job based on the workload metric.

In an implementation, as shown in FIG. 8, an implementation process of step 605 includes the following steps.

Step 6051: Perform metric filtering on the workload metric based on a customized metric list of the job.

For all jobs to which a same computing device needs to allocate resources, workload metrics that need to be obtained for the jobs are the same. However, due to some customization requirements for the jobs and individual differences of different jobs, some workload metrics collected by the computing device by default may not be required by some jobs. Therefore, after collecting the workload metric in step 604, the computing device may further filter, based on the customized metric list of the job, the workload metric collected in step 604, to obtain a workload metric required by the job, and delete a workload metric that is not required by the job.

Step 6052: Obtain the workload of the job based on a workload metric obtained through filtering.

After the workload metric is filtered, the workload of the job may be obtained based on the workload metric obtained through filtering. In an implementation, a pre-trained model may be used to estimate the workload of the job based on the workload metric obtained through filtering. The pre-trained model may be obtained through training based on an executed job. For example, the workload metric obtained through filtering may be input into the pre-trained model, and the pre-trained model analyzes the workload metric obtained through filtering, and estimates the workload of the job, to obtain the workload of the job.

Step 606: Obtain, in a job execution process, usage of a resource that has been allocated to the job.

In an implementation, the usage may be reflected based on a microarchitecture event of a host providing the resource and/or a speed at which the resource executes program instructions. The microarchitecture event may reflect a running status of the virtual machine for executing the job. The speed at which the resource executes the program instructions may reflect occupancy of a physical core allocated to the job. Therefore, both the microarchitecture event and the speed at which the resource executes the program instructions can reflect the usage of the resource that has been allocated to the job. Optionally, the microarchitecture event may be a performance monitor unit (performance monitor unit, PMU) event. The speed at which the resource executes the program instructions may be reflected by a quantity of instructions per second (instructions per second, IPS). In addition, the usage of the resource that has been allocated to the job is reflected in the job execution process, and is affected by a factor (for example, the resource that has been allocated to the job) that affects a job execution status. Therefore, the usage needs to be obtained in the job execution process. The usage is obtained in the job execution process, so that actual usage of the resource can be obtained based on the usage, and then an allocable resource in the resource cluster can be obtained. This helps more accurately match the resource with the job, thereby improving resource utilization.

Step 607: On the basis of allocating an initial resource to the job, adjust, based on the workload, the capability level information, and the usage, the resource allocated to the job.

A main objective of step 607 is to allocate the resource in the resource cluster to the job. When the resource is allocated to the job, if the usage of the resource that has been allocated to the job is obtained, an implementation process of this step is: allocating the resource in the resource cluster to the job based on the workload, the capability level information, and the usage. If the usage of the resource that has been allocated to the job is not obtained, an implementation process of this step is: allocating the resource in the resource cluster to the job based on the workload and the capability level information. In addition, it can be learned from the foregoing descriptions that step 602 is an optional step. When step 602 is performed, an implementation process of step 607 is actually: on the basis of allocating the initial resource to the job, adjusting, based on the workload, the capability level information, and the usage, the resource allocated to the job. When step 602 is not performed, an implementation process of step 607 is actually: allocating the resource in the resource cluster to the job based on the workload, the capability level information, and the usage. The following describes an implementation of resource allocation by using an example in which the workload, the capability level information, and the usage of the resource that has been allocated to the job are obtained, and the initial resource is allocated to the job.

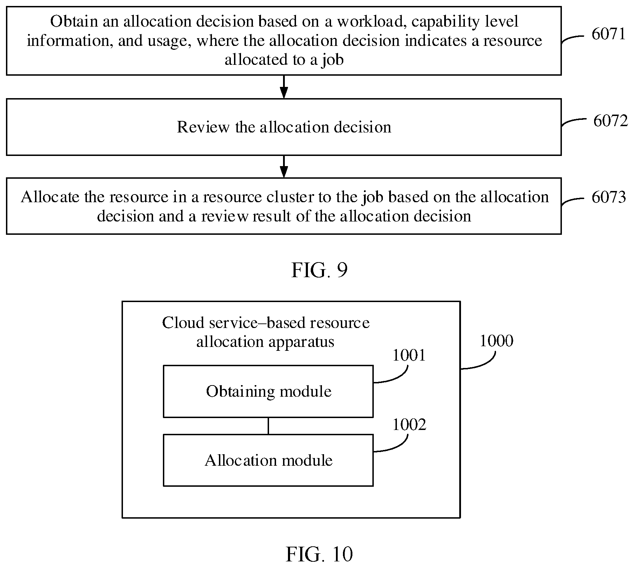

In an implementation, as shown in FIG. 9, an implementation process of step 607 includes the following steps.

Step 6071: Obtain an allocation decision based on the workload, the capability level information, and the usage, where the allocation decision indicates the resource allocated to the job.

It can be learned from the foregoing content that the workload reflects a requirement of the job for the resource, the capability level information reflects a capability and a capability level of the resource in the resource cluster, and the usage reflects the allocable resource in the resource cluster. In addition, a capability and a capability level of the allocable resource in the resource cluster can be determined based on the capability level information and the usage. In this case, after the workload, the capability level information, and the usage are obtained, a resource can be matched for the job based on the workload, the capability level information, and the usage, so as to obtain the allocation decision indicating the resource allocated to the job.

In an implementation process, the allocation decision may indicate a type of the resource allocated to the job, and a quantity and a capability level of each type of resource. The type of the resource indicates a type of the resource, for example, indicates whether the resource is a core or a memory. A quantity of any type of resource indicates a quantity of the type of resource. A capability level of any type of resource indicates a capability level of the type of resource. In this way, various resources can be allocated to the job based on an actual requirement of the job for the resources, and a ratio of the various resources allocated to the job can be controlled, for example, a ratio of a memory resource to a core resource is controlled, to implement refined resource allocation. This improves a matching degree between the job and the resource, thereby improving resource utilization.

Optionally, before step 607 is performed, the method may further include: obtaining a performance bottleneck metric of the job, where the performance bottleneck metric indicates a performance bottleneck of the job. In this case, an implementation process of allocating the resource to the job may include: allocating the resource in the resource cluster to the job based on the workload, the capability level information, the usage, and the performance bottleneck metric. Optionally, the performance bottleneck metric may be reflected by an input/output (input/output, I/O) affinity. The I/O affinity of the job indicates whether the job has an affinity with I/O. If the I/O affinity of the job is affinity, the performance bottleneck of the job is I/O. In this case, more resources are required to relieve an I/O pressure (for example, increasing a parallelism degree).

In an implementation, if the performance bottleneck indicates that the performance bottleneck of the job mainly lies in input/output, when the heterogeneous resource is allocated to the job, a resource with a low capability level in the heterogeneous resource may be preferentially allocated to the job. For example, when the performance bottleneck metric indicates that the performance bottleneck of the job is the input/output performance, and a core resource includes a super core and a common core, the common core may be preferentially allocated to the job when the core resource is allocated to the job, or the super core is allocated to the job when there is no available common core in the resource cluster. In this way, more cores can be allocated to the job at the same costs, so as to maximize the computing parallelism degree of the job. Correspondingly, a resource with a high capability in the heterogeneous resource can also be used for a job that has a high requirement for a capability of a resource, so as to implement effective resource utilization.

It should be noted that, after the allocation decision is obtained, whether resource scheduling needs to be performed based on the allocation decision may be first determined based on the allocation decision. For example, the allocation decision is compared with the resource that has been allocated to the job, to determine whether the resource needs to be scheduled based on the allocation decision. When resource scheduling needs to be performed based on the allocation decision, step 6072 continues to be performed. When resource scheduling does not need to be performed based on the allocation decision, step 603 to step 6071 continue to be performed, and step 6072 continues to be performed only when scheduling needs to be performed based on the allocation decision.

Step 6072: Review the allocation decision.

The allocation decision indicates a resource that needs to be allocated to the job, but an actual situation of the resource cluster may not meet the allocation decision. Therefore, in an implementation, after the allocation decision is obtained, the allocable resource in the resource cluster may be obtained, and then the allocation decision is reviewed based on the allocable resource. When the allocable resource is capable of meeting the allocation decision, for example, when a type of the allocable resource and a quantity and a capability level of each type of resource can respectively correspond to a type of the resource and a quantity and a capability level of each type of resource that are indicated by the allocation decision, it is determined that the allocation decision is approved. When the allocable resource fails to meet the allocation decision, for example, when any one of a type of the allocable resource and a quantity and a capability level of each type of resource cannot correspond to a type of the resource and a quantity and a capability level of each type of resource that are indicated by the allocation decision, it is determined that the allocation decision is not approved.

Step 6073: Allocate the resource in the resource cluster to the job based on the allocation decision and a review result of the allocation decision.

After the allocation decision and the review result of the allocation decision are obtained, the resource in the resource cluster may be allocated to the job based on the allocation decision and the review result of the allocation decision. In an implementation, the implementation process includes: when the review result indicates that the allocable resource is capable of meeting the allocation decision, allocating the resource in the resource cluster to the job based on the allocation decision; or when the review result indicates that the allocable resource fails to meet the allocation decision, adjusting the allocation decision based on the allocable resource. In this way, the allocable resource can meet an adjusted allocation decision, and then the resource in the resource cluster is allocated to the job based on the adjusted allocation decision. For example, it is assumed that the review result of the allocation decision indicates that a quantity of super cores in the allocable resource cannot meet a quantity of super cores indicated by the allocation decision, but the allocable resource includes many common cores. When the allocation decision is adjusted based on the allocable resource, the common cores in the allocable resource may be used to replace the super cores. In this way, the adjusted allocation decision can meet the workload of the job as much as possible. The allocation decision is reviewed, and when the allocation decision is not approved, the allocation decision is adjusted based on the allocable resource. In this way, the allocation decision can be adjusted with reference to an actual situation of the resource cluster. This implements dynamic adjustment on the allocation decision, and effectively ensures a matching degree between the job and the resource, thereby helping improve resource utilization.

In addition, when the allocation decision indicates the type of the resource allocated to the job, and the quantity and the capability level of each type of resource, and the allocation decision is adjusted based on the allocable resource, each type of resource can be separately adjusted, to adjust a ratio of a plurality of types of resources, for example, adjust a ratio of a core to a memory. In a related technology, a plurality of types of resources are usually packaged based on a specified ratio, and a ratio of the packaged plurality of types of resources cannot be adjusted. During resource allocation, only an entire resource package can be allocated to the job, and the job can use only resources with the specified ratio. Consequently, some resources in the resource package are wasted. In this embodiment of this application, the ratio of the plurality of types of resources is adjusted, so that a matching degree between each type of resource and the job can be improved, a waste of resources can be reduced, and further resource utilization can be improved.

In an implementation, allocating the resource in the resource cluster to the job based on the allocation decision and the review result of the allocation decision includes: applying for the resource for the job from the resource cluster based on the allocation decision and the review result of the allocation decision, and then binding the job to the resource applied for for the job. For example, the allocable resource that meets the allocation decision can be obtained based on the allocation decision and the review result of the allocation decision. In this case, when the resource in the resource cluster is allocated to the job, the resource may be applied for from the resource cluster based on the allocable resource that meets the allocation decision, and the job is bound to the resource applied for for the job.

Optionally, because the job includes a plurality of tasks, and the allocation decision may indicate to allocate a resource to each task, binding the job to the resource applied for for the job includes: binding the corresponding task to the resource applied for for each task. In an implementation, Spark is used as an example. The computing device may apply for a resource to each task based on the allocation decision, to create a resource package (container) allocated to each task, and bind the resource package to a corresponding task. In this way, the task can be executed by an executor that uses the resource. The container is a basic unit for a processing capability in Yarn, and is used to encapsulate resources such as a core and a memory. In addition, the computing device may be further responsible for exiting the container after the job is completed. Optionally, a process of applying for the resource may interact with an application management process (application master, AM) in Yarn, to create and exit the container. When the allocation decision indicates the type of the resource allocated to the job, and the quantity and the capability level of each type of resource, and the allocation decision indicates to allocate the resource to each task, the job is bound to the resource, so that each task can be bound to the resource allocated to the task. This implements fine-grained resource scheduling, thereby effectively ensuring accuracy of resource scheduling.

In an implementation, when the computing device shown in FIG. 4 is used to implement the cloud service-based resource allocation method provided in this embodiment of this application, correspondences between the modules in FIG. 4 and the foregoing steps are described below. The collection module 101 is configured to: perform step 603 to obtain the capability level information of the resource in the resource cluster, perform step 604 to obtain the workload metric of the job, perform step 605 to obtain the workload of the job based on the workload metric, and perform step 606 to obtain the usage of a resource that has been allocated to the job. In addition, the collection module 101 is further configured to provide the allocation decision module 102 with the capability level information, the workload of the job, and the usage of a resource that has been allocated to the job. The allocation decision module 102 is configured to perform step 6071 to obtain the allocation decision based on the workload, the capability level information, and the usage, and provide the allocation interaction module 103 with the allocation decision. The allocation interaction module 103 is configured to: perform step 6072 to review the allocation decision, and perform step 6073 to obtain, based on the allocation decision and the review result of the allocation decision, the allocation decision that can be met by the allocable resource, and provide the resource application module 104 with the allocation decision. The resource application module 104 is configured to perform a process of allocating the resource to the job based on the allocation decision in step 6073. Correspondingly, when the computing device shown in FIG. 5 is used to implement the cloud service-based resource allocation method provided in this embodiment of this application, for correspondences between the foregoing processes, and the collection module 101, the allocation decision module 102, and the allocation interaction module 103, refer to the foregoing descriptions. When the resource application module 104 performs the process of allocating the resource to the job based on the allocation decision in step 6073, the resource application module 104 is configured to: apply for the resource for the job from the Yarn resource manager based on the allocation decision, and then bind the job to the resource applied for for the job.

In conclusion, this embodiment of this application provides the cloud service-based resource allocation method. In the cloud service-based resource allocation method, the capability level information of the resource in the resource cluster needs to be obtained, the capability level information can indicate a capability level of the resource in the resource cluster, and resources having different capabilities can be distinguished based on the capability level information. Therefore, when the resource in the resource cluster is allocated to the job, a feature of unbalanced capabilities of heterogeneous resources can be considered, and bidirectional matching between a resource and a job can be implemented based on the capability level of the resource and the workload of the job. This can improve a matching degree between the job and the resource, and implement more accurate resource allocation, thereby improving resource utilization, and helping improve the computing parallelism degree of the job.

In addition, in the cloud service-based resource allocation method, a plurality of metrics such as the workload metric, the capability level information of the resource, and the usage of the resource, need to be collected. Resource allocation is performed based on the plurality of metrics, so that matching between the job and the resource can be considered in a plurality of dimensions. This helps improve the matching degree between the job and the resource, thereby ensuring resource utilization and the computing parallelism degree of the job.

In addition, metrics such as the capability level information and the usage are hardware metrics of the resource and do not change due to the job, and the hardware metrics are provided by most or even all hardware. Therefore, when the resource is allocated to the job based on the hardware metrics such as the capability level information and the usage, a more general resource capability and a requirement of the job for the resource can be obtained. This helps improve generality of the cloud service-based resource allocation method provided in this embodiment of this application, and apply the cloud service-based resource allocation method to resource allocation in more fields. For example, the method is applied to resource allocation in a big data computing framework, or applied to another scenario of performing resource allocation on a batch processing job, or applied to another optimization scenario of performing resource allocation by using a heterogeneous resource platform (for example, a CPU+graphics processing unit (graphics processing unit, GPU) heterogeneous resource platform), to implement resource scheduling on resources with different resource capabilities and costs. In addition, the cloud service-based resource allocation method is used to allocate the resource to the job, and further used to perform resource scheduling on a resource pool in the cluster.

In addition, according to the cloud service-based resource allocation method, resource allocation can be fully automated without manual intervention. This effectively ensures a degree of automation of resource allocation.

It should be noted that a sequence of steps of the cloud service-based resource allocation method provided in embodiments of this application may be appropriately adjusted, or steps may be correspondingly added or deleted based on a situation. Any method variation readily figured out by a person skilled in the art within the technical scope disclosed in this application shall fall within the protection scope of this application. Therefore, details are not described again.

The foregoing describes the cloud service-based resource allocation provided in embodiments of this application. Corresponding to the foregoing method, an embodiment of this application further provides a cloud service-based resource allocation apparatus. FIG. 10 is a diagram of a structure of a cloud service-based resource allocation apparatus according to an embodiment of this application. Based on the following plurality of modules shown in FIG. 10, the cloud service-based resource allocation apparatus shown in FIG. 10 can perform all or a part of the operations shown in FIG. 6. It should be understood that the apparatus may include more additional modules than the shown modules or a part of the shown modules may be omitted. This is not limited in embodiments of this application. Optionally, the cloud service-based resource allocation apparatus may be configured on a cloud platform. As shown in FIG. 10, the cloud service-based resource allocation apparatus 1000 includes:
an obtaining module 1001, configured to obtain capability level information of a resource in a resource cluster, where the resource cluster includes at least one type of heterogeneous resource, the heterogeneous resource includes a plurality of types of sub-resources, and the plurality of types of sub-resources have a same capability but different capability levels, where
the obtaining module 1001 is further configured to obtain a workload of a job to which a resource is to be allocated; and
an allocation module 1002, configured to allocate the resource in the resource cluster to the job based on the workload and the capability level information.

Optionally, the obtaining module 1001 is specifically configured to: obtain a workload metric of the job, where the workload metric includes one or more of the following: execution logic and a data parallelism degree of the job, a job operator, and an amount of data related to the job operator; and obtain the workload of the job based on the workload metric.

Optionally, the workload metric further includes one or more of the following: a computing parallelism degree and an input data amount of the job, and idle time of the resource allocated to the job.

Optionally, the obtaining module 1001 is specifically configured to: perform metric filtering on the workload metric based on a customized metric list of the job; and obtain the workload of the job based on a workload metric obtained through filtering.

Optionally, the job includes at least one execution phase, the execution phase includes at least one execution task, and the obtaining module 1001 is specifically configured to obtain the workload metric by the job and/or the execution phase.

Optionally, the obtaining module 1001 is further configured to obtain, in a running process of the job, usage of a resource that has been allocated to the job. Correspondingly, the allocation module 1002 is specifically configured to allocate the resource in the resource cluster to the job based on the workload, the capability level information, and the usage.

Optionally, the usage is reflected based on a microarchitecture event of a host providing the resource and/or a speed at which the resource executes program instructions.

Optionally, the obtaining module 1001 is further configured to obtain a performance bottleneck metric of the job, where the performance bottleneck metric indicates a performance bottleneck of the job. Correspondingly, the allocation module 1002 is specifically configured to allocate the resource in the resource cluster to the job based on the workload, the capability level information, and the performance bottleneck metric.

Optionally, the allocation module 1002 is specifically configured to: when the performance bottleneck metric indicates that the performance bottleneck of the job is input/output performance, allocate a resource with a low capability level in the heterogeneous resource to the job based on the workload and the capability level information.

Optionally, the allocation module 1002 is specifically configured to: on a basis of allocating an initial resource to the job, adjust, based on the workload and the capability level information, the resource allocated to the job.

Optionally, the allocation module 1002 is specifically configured to: obtain an allocation decision based on the workload and the capability level information, where the allocation decision indicates the resource allocated to the job; review the allocation decision; and allocate the resource in the resource cluster to the job based on the allocation decision and a review result of the allocation decision.

Optionally, the allocation decision indicates a type of the resource allocated to the job, and a quantity and a capability level of each type of resource.

Optionally, the allocation module 1002 is specifically configured to: obtain an allocable resource in the resource cluster; and review the allocation decision based on the allocable resource.

Optionally, the allocation module 1002 is specifically configured to: when the review result indicates that the allocable resource is capable of meeting the allocation decision, allocate the resource in the resource cluster to the job based on the allocation decision; or when the review result indicates that the allocable resource fails to meet the allocation decision, adjust the allocation decision based on the allocable resource, and allocate the resource in the resource cluster to the job based on an adjusted allocation decision.

Optionally, the allocation module 1002 is specifically configured to: apply for the resource for the job from the resource cluster based on the allocation decision and the review result of the allocation decision; and bind the job to the resource applied for for the job.

Optionally, the job includes a plurality of tasks, the allocation decision indicates to allocate a resource to each task, and the allocation module 1002 is specifically configured to bind the corresponding task to the resource applied for for each task.

Optionally, the resource includes a virtual resource obtained through virtualization based on a physical resource.

Optionally, the obtaining module 1001 is specifically configured to: obtain a mapping relationship between the physical resource and the virtual resource obtained through virtualization based on the physical resource; and obtain the capability level information of the resource based on the mapping relationship and capability level information of the physical resource.

Optionally, the at least one type of heterogeneous resource includes a core heterogeneous resource, the core heterogeneous resource includes a super core and a common core, and a capability level of the super core is higher than a capability level of the common core.

In conclusion, this embodiment of this application provides the cloud service-based resource allocation apparatus. In the cloud service-based resource allocation apparatus, the capability level information of the resource in the resource cluster needs to be obtained, the capability level information can indicate a capability level of the resource in the resource cluster, and resources having different capabilities can be distinguished based on the capability level information. Therefore, when the resource in the resource cluster is allocated to the job, a feature of unbalanced capabilities of heterogeneous resources can be considered, and bidirectional matching between a resource and a job can be implemented based on the capability level of the resource and the workload of the job. This can improve a matching degree between the job and the resource, and implement more accurate resource allocation, thereby improving resource utilization, and helping improve a computing parallelism degree of the job.

In addition, in the cloud service-based resource allocation apparatus, a plurality of metrics such as the workload metric, the capability level information of the resource, and the usage of the resource, need to be collected. Resource allocation is performed based on the plurality of metrics, so that matching between the job and the resource can be considered in a plurality of dimensions. This helps improve the matching degree between the job and the resource, thereby ensuring resource utilization and the computing parallelism degree of the job.

In addition, metrics such as the capability level information and the usage are hardware metrics of the resource and do not change due to the job, and the hardware metrics are provided by most or even all hardware. Therefore, when the resource is allocated to the job based on the hardware metrics such as the capability level information and the usage, a more general resource capability and a requirement of the job for the resource can be obtained. This helps improve generality of the cloud service-based resource allocation apparatus provided in this embodiment of this application, and use the cloud service-based resource allocation apparatus in resource allocation in more fields. For example, the apparatus is used in resource allocation in a big data computing framework, or used in another scenario of performing resource allocation on a batch processing job, or used in another optimization scenario of performing resource allocation by using a heterogeneous resource platform (for example, a CPU+GPU heterogeneous resource platform), to implement resource scheduling on resources with different resource capabilities and costs. In addition, the cloud service-based resource allocation apparatus is used to allocate the resource to the job, and further used to perform resource scheduling on a resource pool in the cluster.

In addition, according to the cloud service-based resource allocation apparatus, resource allocation can be fully automated without manual intervention. This effectively ensures a degree of automation of resource allocation.

Both the obtaining module 1001 and the allocation module 1002 may be implemented by using software, or may be implemented by using hardware. For example, the following uses the obtaining module 1001 as an example to describe an implementation of the obtaining module 1001. Similarly, for an implementation of the allocation module 1002, refer to the implementation of the obtaining module 1001.

The module is used as an example of a software functional unit, and the obtaining module 1001 may include code run on a computing instance. The computing instance may include at least one of a physical host (a computing device), a virtual machine, and a container. Further, there may be one or more computing instances. For example, the obtaining module 1001 may include code run on a plurality of hosts/virtual machines/containers. It should be noted that the plurality of hosts/virtual machines/containers used to run the code may be distributed in a same region (region), or may be distributed in different regions. Further, the plurality of hosts/virtual machines/containers used to run the code may be distributed in a same availability zone (availability zone, AZ), or may be distributed in different AZs. Each AZ includes one data center or a plurality of data centers that are geographically close to each other. Usually, one region may include a plurality of AZs.

Similarly, the plurality of hosts/virtual machines/containers used to run the code may be distributed in a same virtual private cloud (virtual private cloud, VPC), or may be distributed in a plurality of VPCs. Generally, one VPC is set in one region. A communication gateway needs to be set in each VPC for communication between two VPCs in a same region or between VPCs in different regions. Interconnection between VPCs is implemented through the communication gateway.

The module is used as an example of a hardware functional unit, and the obtaining module 1001 may include at least one computing device, for example, a server. Alternatively, the obtaining module 1001 may be a device implemented by using an application-specific integrated circuit (application-specific integrated circuit, ASIC), a programmable logic device (programmable logic device, PLD), or the like. The PLD may be a complex programmable logic device (complex programmable logic device, CPLD), a field-programmable gate array (field-programmable gate array, FPGA), a generic array logic (generic array logic, GAL), or any combination thereof.

A plurality of computing devices included in the obtaining module 1001 may be distributed in a same region, or may be distributed in different regions. The plurality of computing devices included in the obtaining module 1001 may be distributed in a same AZ, or may be distributed in different AZs. Similarly, a plurality of computing devices included in the obtaining module 1001 may be distributed in a same VPC, or may be distributed in a plurality of VPCs. The plurality of computing devices may be any combination of computing devices such as a server, an ASIC, a PLD, a CPLD, an FPGA, and a GAL.

It should be noted that, in another embodiment, either of the obtaining module 1001 and the allocation module 1002 may be configured to perform any step in the cloud service-based resource allocation method. Steps implemented by the obtaining module 1001 and the allocation module 1002 may be specified as required. The obtaining module 1001 and the allocation module 1002 separately implement different steps in the cloud service-based resource allocation method, to implement all functions of the cloud service-based resource allocation apparatus.

It can be clearly understood by a person skilled in the art that, for the purpose of convenient and brief description, for detailed working processes of the foregoing apparatus and modules, refer to corresponding content in the foregoing method embodiment. Details are not described herein again.

All or some of the foregoing embodiments may be implemented by using software, hardware, firmware, or any combination thereof. When software is used for implementation, all or some of embodiments may be implemented in a form of computer program product. A computer program product that provides a program development platform includes one or more computer instructions. When the computer program instructions are loaded and executed on a computing device, all or some of the functions of the cloud service-based resource allocation method provided in embodiments of this application are implemented.

In addition, the computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium stores computer program instructions that provide a program development platform.

An embodiment of this application further provides a computing device cluster. The computing device cluster includes at least one computing device. The computing device may be a server, for example, a central server, an edge server, or a local server in a local data center. In some embodiments, the computing device may alternatively be a terminal device, for example, a desktop computer, a notebook computer, or a smartphone.

Optionally, for a structure of the at least one computing device included in the computing device cluster, refer to the computing device 10 shown in FIG. 1. A memory 102 in one or more computing devices 10 in the computing device cluster may store same instructions for performing the cloud service-based resource allocation method.

In some possible implementations, the memory 102 in one or more computing devices 10 in the computing device cluster may alternatively separately store a part of the instructions for performing the cloud service-based resource allocation method. In other words, a combination of the one or more computing devices 10 may jointly execute the instructions for performing the cloud service-based resource allocation method.

It should be noted that memories 102 in different computing devices 10 in the computing device cluster may store different instructions, which are respectively used to perform a part of functions of the cloud service-based resource allocation apparatus. In other words, the instructions stored in the memories 102 in the different computing devices 10 may implement functions of one or more of the obtaining module and the allocation module.

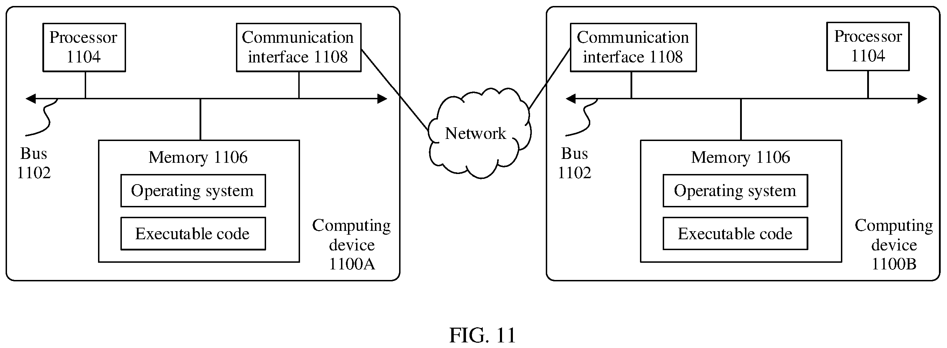

In some possible implementations, the one or more computing devices in the computing device cluster may be connected through a network. The network may be a wide area network, a local area network, or the like. FIG. 11 shows a possible implementation. As shown in FIG. 11, two computing devices 1100A and 1100B are connected through a network. Specifically, each computing device is connected to the network through a communication interface of the computing device. In this possible implementation, the computing devices 1100A and 1100B include buses 1102, processors 1104, memories 1106, and communication interfaces 1108. The memory 1106 in the computing device 1100A stores instructions for performing a function of an obtaining module. In addition, the memory 1106 in the computing device 1100B stores instructions for performing a function of an allocation module.

It should be understood that functions of the computing device 1100A shown in FIG. 11 may alternatively be completed by a plurality of computing devices 1100. Similarly, functions of the computing device 1100B may also be implemented by a plurality of computing devices 1100. In addition, a deployment manner of the modules configured to implement the cloud service-based resource allocation method in the computing device may also be adjusted based on an application requirement.

An embodiment of this application further provides a computer-readable storage medium. The computer-readable storage medium is a non-volatile computer-readable storage medium. The computer-readable storage medium includes program instructions. When the program instructions are run on a computing device, the computing device is enabled to implement the cloud service-based resource allocation method provided in embodiments of this application.

An embodiment of this application further provides a computer program product including instructions. When the computer program product runs on a computer, the computer is enabled to perform the cloud service-based resource allocation method provided in embodiments of this application.

A person of ordinary skill in the art may understand that all or some of the steps of the embodiments may be implemented by hardware or a program instructing related hardware. The program may be stored in a computer-readable storage medium. The storage medium may be a read-only memory, a magnetic disk, an optical disc, or the like.

It should be noted that information (including but not limited to user equipment information, personal information of a user, and the like), data (including but not limited to data used for analysis, stored data, displayed data, and the like), and signals in this application are used under authorization by the user or full authorization by all parties, and collection, use, and processing of related data need to conform to related laws, regulations, and standards of related countries and regions. For example, instructions, information, and the like in this application are all obtained in a case of full authorization.

In embodiments of this application, the terms "first", "second", and "third" are merely used for description, but cannot be understood as an indication or implication of relative importance. The term "at least one" means one or more, and the term "a plurality of" means two or more, unless otherwise expressly limited.

The term "and/or" in this application describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

The foregoing descriptions are merely optional embodiments of this application, but are not intended to limit this application. Any modification, equivalent replacement, improvement, or the like made within the concept and principle of this application shall fall within the protection scope of this application.

## Claims

1. A cloud service-based resource allocation method, performed by a cloud platform, wherein the method comprises:
obtaining capability level information of a resource in a resource cluster, wherein the resource cluster comprises at least one type of heterogeneous resource, the heterogeneous resource comprises a plurality of types of sub-resources, and the plurality of types of sub-resources have a same capability but different capability levels;
obtaining a workload of a job to which a resource is to be allocated; and
allocating the resource in the resource cluster to the job based on the workload and the capability level information.

2. The method according to claim 1, wherein obtaining the workload of the job to which the resource is to be allocated comprises:
obtaining a workload metric of the job, wherein the workload metric comprises one or more of the following: execution logic and a data parallelism degree of the job, a job operator, and an amount of data related to the job operator; and
obtaining the workload of the job based on the workload metric.

3. The method according to claim 2, wherein the workload metric further comprises one or more of the following: a computing parallelism degree and an input data amount of the job, and idle time of the resource allocated to the job.

4. The method according to claim 2 or 3, wherein obtaining the workload of the job based on the workload metric comprises:
performing metric filtering on the workload metric based on a customized metric list of the job; and
obtaining the workload of the job based on a workload metric obtained through filtering.

5. The method according to any one of claims 2 to 4, wherein the job comprises at least one execution phase, the execution phase comprises at least one execution task, and obtaining the workload metric of the job comprises:
obtaining the workload metric by the job and/or the execution stage.

6. The method according to any one of claims 1 to 5, wherein before allocating the resource in the resource cluster to the job based on the workload and the capability level information, the method further comprises:
Obtaining, in a running process of the job, usage of a resource that has been allocated to the job; and
allocating the resource in the resource cluster to the job based on the workload and the capability level information comprises:
allocating the resource in the resource cluster to the job based on the workload, the capability level information, and the usage.

7. The method according to claim 6, wherein the usage is reflected based on a microarchitecture event of a host providing the resource and/or a speed at which the resource executes program instructions.

8. The method according to any one of claims 1 to 7, wherein before allocating the resource in the resource cluster to the job based on the workload and the capability level information, the method further comprises:
obtaining a performance bottleneck metric of the job, wherein the performance bottleneck metric indicates a performance bottleneck of the job; and
allocating the resource in the resource cluster to the job based on the workload and the capability level information comprises:
allocating the resource in the resource cluster to the job based on the workload, the capability level information, and the performance bottleneck metric.

9. The method according to claim 8, wherein allocating the resource in the resource cluster to the job based on the workload, the capability level information, and the performance bottleneck metric comprises:
when the performance bottleneck metric indicates that the performance bottleneck of the job is input/output performance, allocating a resource with a low capability level in the heterogeneous resource to the job based on the workload and the capability level information.

10. The method according to any one of claims 1 to 9, wherein allocating the resource in the resource cluster to the job based on the workload and the capability level information comprises:
on a basis of allocating an initial resource to the job, adjusting, based on the workload and the capability level information, the resource allocated to the job.

11. The method according to any one of claims 1 to 10, wherein allocating the resource in the resource cluster to the job based on the workload and the capability level information comprises:
obtaining an allocation decision based on the workload and the capability level information, wherein the allocation decision indicates the resource allocated to the job;
reviewing the allocation decision; and
allocating the resource in the resource cluster to the job based on the allocation decision and a review result of the allocation decision.

12. The method according to claim 11, wherein the allocation decision indicates a type of the resource allocated to the job, and a quantity and a capability level of each type of resource.

13. The method according to claim 11 or 12, wherein reviewing the allocation decision comprises:
obtaining an allocable resource in the resource cluster; and
reviewing the allocation decision based on the allocable resource.

14. The method according to any one of claims 11 to 13, wherein allocating the resource in the resource cluster to the job based on the allocation decision and the review result of the allocation decision comprises:
when the review result indicates that the allocable resource is capable of meeting the allocation decision, allocating the resource in the resource cluster to the job based on the allocation decision; or
when the review result indicates that the allocable resource fails to meet the allocation decision, adjusting the allocation decision based on the allocable resource, and allocating the resource in the resource cluster to the job based on an adjusted allocation decision.

15. The method according to any one of claims 11 to 14, wherein allocating the resource in the resource cluster to the job based on the allocation decision and the review result of the allocation decision comprises:
applying for the resource for the job from the resource cluster based on the allocation decision and the review result of the allocation decision; and
binding the job to the resource applied for for the job.

16. The method according to claim 15, wherein the job comprises a plurality of tasks, the allocation decision indicates to allocate a resource to each task, and binding the job to the resource applied for for the job comprises:
binding the corresponding task to the resource applied for for each task.

17. The method according to any one of claims 1 to 16, wherein the resource comprises a virtual resource obtained through virtualization based on a physical resource.

18. The method according to claim 17, wherein obtaining the capability level information of the resource in the resource cluster comprises:
obtaining a mapping relationship between the physical resource and the virtual resource obtained through virtualization based on the physical resource; and
obtaining the capability level information of the resource based on the mapping relationship and capability level information of the physical resource.

19. The method according to any one of claims 1 to 18, wherein the at least one type of heterogeneous resource comprises a core heterogeneous resource, the core heterogeneous resource comprises a super core and a common core, and a capability level of the super core is higher than a capability level of the common core.

20. A cloud service-based resource allocation apparatus, configured on a cloud platform, wherein the apparatus comprises:
an obtaining module, configured to obtain capability level information of a resource in a resource cluster, wherein the resource cluster comprises at least one type of heterogeneous resource, the heterogeneous resource comprises a plurality of types of sub-resources, and the plurality of types of sub-resources have a same capability but different capability levels, wherein
the obtaining module is further configured to obtain a workload of a job to which a resource is to be allocated; and
an allocation module, configured to allocate the resource in the resource cluster to the job based on the workload and the capability level information.

21. The apparatus according to claim 20, wherein the obtaining module is specifically configured to:
obtain a workload metric of the job, wherein the workload metric comprises one or more of the following: execution logic and a data parallelism degree of the job, a job operator, and an amount of data related to the job operator; and
obtain the workload of the job based on the workload metric.

22. The apparatus according to claim 21, wherein the workload metric further comprises one or more of the following: a computing parallelism degree and an input data amount of the job, and idle time of the resource allocated to the job.

23. The apparatus according to claim 21 or 22, wherein the obtaining module is specifically configured to:
perform metric filtering on the workload metric based on a customized metric list of the job; and
obtain the workload of the job based on a workload metric obtained through filtering.

24. The apparatus according to any one of claims 21 to 23, wherein the job comprises at least one execution phase, the execution phase comprises at least one execution task, and the obtaining module is specifically configured to obtain the workload metric by the job and/or the execution phase.

25. The apparatus according to any one of claims 20 to 24, wherein
the obtaining module is further configured to obtain, in a running process of the job, usage of a resource that has been allocated to the job; and
the allocation module is specifically configured to allocate the resource in the resource cluster to the job based on the workload, the capability level information, and the usage.

26. The apparatus according to claim 25, wherein the usage is reflected based on a microarchitecture event of a host providing the resource and/or a speed at which the resource executes program instructions.

27. The apparatus according to any one of claims 20 to 26, wherein
the obtaining module is further configured to obtain a performance bottleneck metric of the job, wherein the performance bottleneck metric indicates a performance bottleneck of the job; and
the allocation module is specifically configured to allocate the resource in the resource cluster to the job based on the workload, the capability level information, and the performance bottleneck metric.

28. The apparatus according to claim 27, wherein the allocation module is specifically configured to: when the performance bottleneck metric indicates that the performance bottleneck of the job is input/output performance, allocate a resource with a low capability level in the heterogeneous resource to the job based on the workload and the capability level information.

29. The apparatus according to any one of claims 20 to 28, wherein the allocation module is specifically configured to: on a basis of allocating an initial resource to the job, adjust, based on the workload and the capability level information, the resource allocated to the job.

30. The apparatus according to any one of claims 20 to 29, wherein the allocation module is specifically configured to:
obtain an allocation decision based on the workload and the capability level information, wherein the allocation decision indicates the resource allocated to the job;
review the allocation decision; and
allocate the resource in the resource cluster to the job based on the allocation decision and a review result of the allocation decision.

31. The apparatus according to claim 30, wherein the allocation decision indicates a type of the resource allocated to the job, a quantity and a capability level of each type of resource.

32. The apparatus according to claim 30 or 31, wherein the allocation module is specifically configured to:
obtain an allocable resource in the resource cluster; and
review the allocation decision based on the allocable resource.

33. The apparatus according to any one of claims 30 to 32, wherein the allocation module is specifically configured to:
when the review result indicates that the allocable resource is capable of meeting the allocation decision, allocate the resource in the resource cluster to the job based on the allocation decision; or
when the review result indicates that the allocable resource fails to meet the allocation decision, adjust the allocation decision based on the allocable resource, and allocate the resource in the resource cluster to the job based on an adjusted allocation decision.

34. The apparatus according to any one of claims 30 to 33, wherein the allocation module is specifically configured to:
apply for the resource for the job from the resource cluster based on the allocation decision and the review result of the allocation decision; and
bind the job to the resource applied for for the job.

35. The apparatus according to claim 34, wherein the job comprises a plurality of tasks, the allocation decision indicates to allocate a resource to each task, and the allocation module is specifically configured to bind the corresponding task to the resource applied for for each task.

36. The apparatus according to any one of claims 20 to 35, wherein the resource comprises a virtual resource obtained through virtualization based on a physical resource.

37. The apparatus according to claim 36, wherein the obtaining module is specifically configured to:
obtain a mapping relationship between the physical resource and the virtual resource obtained through virtualization based on the physical resource; and
obtain the capability level information of the resource based on the mapping relationship and capability level information of the physical resource.

38. The apparatus according to any one of claims 20 to 37, wherein the at least one type of heterogeneous resource comprises a core heterogeneous resource, the core heterogeneous resource comprises a super core and a common core, and a capability level of the super core is higher than a capability level of the common core.

39. A computing device, comprising a memory and a processor, wherein the memory stores program instructions, and the processor runs the program instructions to perform the method according to any one of claims 1 to 19.

40. A computer cluster, comprising a plurality of computing devices, wherein the plurality of computing devices comprise a plurality of processors and a plurality of memories, the plurality of memories store program instructions, and the plurality of processors run the program instructions, to enable the computer cluster to perform the method according to any one of claims 1 to 19.

41. A computer-readable storage medium, comprising program instructions, wherein when the program instructions are run on a computing device, the computing device is enabled to perform the method according to any one of claims 1 to 19.

42. A computer program product, wherein when the computer program product runs on a computer, the computer is enabled to perform the method according to any one of claims 1 to 19.
